# EUROPEAN PATENT APPLICATION

(11) **EP 4 830 941 A1**
(43) Date of publication of application: **28.10.2026**
(21) Application number: 25172216.1
(22) Date of filing: 24.04.2025
(51) Int. Cl.: B60B 27/00, B60T 5/00, F16D 65/78

(54) **WHEEL UNIT WITH FRICTION BRAKE HOUSING AND STATOR ASSEMBLY INCLUDING COOLING CHANNEL**

(71) Applicant: Volvo Truck Corporation, 405 08 Göteborg (SE)
(72) Inventor: ZACHRISSON, Jan, 439 94 ONSALA (SE); HILTUNEN, Larry, 423 36 TORSLANDA (SE); LAINE, Leo, 414 84 GÖTEBORG (SE); STENBRATT, Ulf, 434 94 VALLDA (SE); SJÖHOLM, Martin, 352 50 VÄXJÖ (SE); AUGUSTSSON, Kent, 517 37 BOLLEBYGD (SE); PETERSSON, Martin, 433 68 SÄVEDALEN (SE); RUFAT, Arturo, 416 74 GÖTEBORG (SE)
(74) Representative: Kransell & Wennborg KB

(57) **Abstract**

A wheel unit (9) comprises a rim (17) configured for mounting of a tire (13) radially outside the rim (17), in relation to a rotational axis (11) of the wheel unit (9). A rotor (19) of an electrical machine (20) is coupled to the rim (17) such that the rim (17) rotates together with the rotor (19). The wheel unit (9) further comprises a friction brake assembly (21), including a first friction brake member (27) coupled to the rim (17) to rotate together with the rim (17), and a non-rotating second friction brake member (29a-b) controllable to interact with the first friction brake member (27). A friction brake housing and stator assembly (23) is concentrically arranged inside the rotor (19), encloses the friction brake assembly (21), and includes a cooling channel (31) for circulation of cooling liquid for cooling of the friction brake assembly (21) and a stator (33) of the electrical machine (20).

## Description

### TECHNICAL FIELD

The disclosure relates generally to a vehicle wheel unit including an electrical machine, with a rotor of the electrical machine coupled to a rim of the wheel unit. In particular aspects, the disclosure relates to a wheel unit with a friction brake housing and stator assembly concentrically arranged inside the rotor or the electrical machine of the wheel unit. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A wheel unit may include an electrical machine for traction and regenerative braking, and a friction brake for mechanical braking. The electrical machine may comprise a stator and a rotor, with the rotor connected to a rim for mounting of a tire. The friction brake includes a rotating friction member and a non-rotating friction member, and is controllable to cause the friction members to interact to generate braking torque.

The available installation space for the electrical machine, the friction brake, and associated structures is limited. This poses challenges for mechanical design, thermal management, and integration with suspension or steering components.

There is a need for a more space-efficient wheel unit that also enables higher efficiency in operation.

### SUMMARY

According to a first aspect of the disclosure, there is provided a wheel unit configured to rotate around a rotational axis, the wheel unit comprising: a rim configured for mounting of a tire radially outside the rim, in relation to the rotational axis; a rotor of an electrical machine coupled to the rim such that the rim rotates together with the rotor; a friction brake assembly including a first friction brake member coupled to the rim to rotate together with the rim, and a non-rotating second friction brake member controllable to interact with the first friction brake member; and a friction brake housing and stator assembly concentrically arranged inside the rotor and enclosing the friction brake assembly, the friction brake housing and stator assembly including a cooling channel for circulation of cooling liquid for cooling of the friction brake assembly and a stator of the electrical machine. The first aspect of the disclosure may seek to provide for a compact and thermally integrated wheel unit, wherein components of the electrical machine and the friction brake may be effectively cooled by a shared cooling arrangement. A technical benefit may include improved packaging and thermal efficiency while reducing the number of dedicated cooling subsystems.

The cooling channel may be formed by machining grooves or bores into one or more mating surfaces before assembly, such that the channel is enclosed when the parts are joined. Alternatively, the channel may be cast into a component during manufacturing using core inserts to define the internal geometry. Additive manufacturing may also be used to build the channel with a complex or conformal path, allowing the coolant flow to follow the thermal load distribution. In some examples, the channel may be defined between interlocking surface structures, such as longitudinal splines or ribs, creating multiple parallel flow paths when the components are assembled.

Optionally in some examples, including in at least one preferred example, the friction brake housing and stator assembly may comprise a heat transfer structure thermally connecting a friction brake housing and the stator. A technical benefit may include that thermal energy from both the stator and the friction brake can be transferred away from the wheel unit in an energy-efficient and space-efficient manner.

Optionally in some examples, including in at least one preferred example, the heat transfer structure may be a separate cooling part arranged between the friction brake housing and the stator, the cooling channel being formed in the cooling part. A technical benefit may include that the cooling channel can be manufactured independently of surrounding structural components, allowing for design flexibility and optimized coolant flow. The separate cooling part may form a thermal interface with the stator radially outside and with the friction brake housing radially inside, thereby providing for efficient removal of heat from both components in a compact radial arrangement. The thermal interface between the separate cooling part and the surrounding components may be configured to enable efficient heat transfer from both the stator and the friction brake housing. This may be achieved by providing large contact surfaces between the cooling part and the adjoining components. In some examples, axially extending surface structures, such as splines or grooves, may be formed on the stator, the cooling part, and the friction brake housing. The cooling part may then be slotted axially into position, creating continuous contact paths that promote effective thermal conduction while also simplifying assembly.

Optionally in some examples, including in at least one preferred example, the friction brake housing and the stator may be integrally formed as a single structural component. A technical benefit may include that the cooling channel can be integrated directly into the shared structure, reducing the number of interfaces and improving thermal conductivity while also simplifying assembly.

Optionally in some examples, including in at least one preferred example, the friction brake housing and stator assembly may include a filter for capturing brake particles resulting from interaction between the first friction brake member and the second friction brake member. The friction brake housing and stator assembly may sealingly enclose the friction brake assembly, thereby forcing air exchange to take place through the filter. A technical benefit may include that airborne brake particles can be contained within the assembly, reducing environmental contamination and wear on surrounding components. This may support compliance with forthcoming regulatory requirements such as Euro 7, which places limits on non-exhaust particulate emissions from braking systems.

Optionally in some examples, including in at least one preferred example, the second friction brake member may comprise at least a first disc arranged on an axial first side of the first friction brake member and a second disc arranged on an axial second side of the first friction brake member. A technical benefit may include that braking forces can be applied symmetrically across the rotating member, enabling compact axial integration and allowing the friction brake to be enclosed in a sealed housing suitable for contamination control and thermal management.

Optionally in some examples, including in at least one preferred example, the friction brake housing and stator assembly may be configured to enclose the first friction brake member and the second friction brake member. A technical benefit may include that the friction brake components can be physically protected from external contamination, while allowing control of air exchange and particle emissions within a defined internal volume.

Optionally in some examples, including in at least one preferred example, the wheel unit may comprise a heat-dissipation arrangement thermally connected to the rim and configured to transfer heat from the electrical machine to a tire mounted on the rim. A technical benefit may include that thermal energy generated in the electrical machine can be directed to the rim and further to the tire, allowing for active or passive heating of the tire and thereby improving rolling characteristics during cold starts or low-temperature operation. This may reduce energy losses associated with tire deformation and rolling resistance, and may contribute to increased vehicle range.

Optionally in some examples, including in at least one preferred example, the heat-dissipation arrangement may comprise a plurality of protrusions, which may be radially directed in relation to the rotational axis of the wheel unit. A technical benefit may include that the available surface area for thermal conduction and convection is increased, allowing for more effective transfer of heat from the rim to the tire.

Optionally in some examples, including in at least one preferred example, the heat-dissipation arrangement may be made of a metallic material with high thermal conductivity to improve heat conduction from the rim to the tire. A technical benefit may include that the material properties of the heat-dissipation arrangement support rapid and efficient thermal transfer, enhancing the effectiveness of tire heating during vehicle operation.

Optionally in some examples, including in at least one preferred example, the electrical machine may be configured to be controlled to generate additional heat for tire heating by adjusting at least one control parameter, including excitation frequency or voltage. A technical benefit may include that active control of machine losses enables intentional generation of heat for warming the tire, without the need for separate heating elements. Although this may result in temporarily reduced efficiency of the electrical machine, the corresponding reduction in rolling resistance may more than compensate for this loss, such that the overall energy efficiency of the vehicle may be improved.

Optionally in some examples, including in at least one preferred example, the rotor of the electrical machine may comprise a plurality of conductors for generating a magnetic field of the rotor. A technical benefit may include that the rotor can be designed to support different machine types, enabling efficient operation in both motoring and braking modes. The presence of conductors in the rotor may also enable control of the electrical machine to generate heat in the rotor, which may further contribute to warming of the tire.

Optionally in some examples, including in at least one preferred example, the electrical machine may be an induction machine. A technical benefit may include that an induction machine enables robust and cost-efficient operation without requiring rotor-side electronics or active excitation, while still allowing controlled heat generation in the rotor for tire heating.

Optionally in some examples, including in at least one preferred example, the electrical machine may be an externally excited machine. A technical benefit may include that external excitation allows precise control of the rotor magnetic field, which may be used to regulate both traction performance and intentional heat generation for tire heating purposes.

Optionally in some examples, including in at least one preferred example, the wheel unit may comprise a steering knuckle, wherein the friction brake housing and stator assembly is configured for non-rotating mechanical coupling to a corresponding interface structure of the steering knuckle. A technical benefit may include that the stator and brake assembly can be rigidly mounted to the steering structure of the vehicle, allowing for secure integration without requiring additional brackets or housings.

Optionally in some examples, including in at least one preferred example, the friction brake housing and stator assembly may comprise an interface portion surrounding the rotational axis, the interface portion being shaped for form-fitting engagement with a corresponding interface portion of the steering knuckle. A technical benefit may include that the components can be assembled with high positional accuracy and torsional strength, facilitating reliable transmission of loads between the wheel unit and the vehicle structure.

Optionally in some examples, including in at least one preferred example, the interface portion of the friction brake housing and stator assembly and the corresponding interface portion of the steering knuckle may have a polygonal cross-section for transmission of torque. A technical benefit may include that torque can be transmitted without relying on additional fasteners or splines, allowing for a compact and mechanically robust connection between the wheel unit and the steering knuckle.

Optionally in some examples, including in at least one preferred example, the corresponding interface portion of the steering knuckle may be configured to fit inside the interface portion of the friction brake housing and stator assembly, in relation to the rotational axis. A technical benefit may include that the steering knuckle can be received in an internal fit arrangement, providing a centered and stable interface that supports axial assembly and effective load distribution.

Optionally in some examples, including in at least one preferred example, the wheel unit according to the first aspect may be included in a vehicle.

Optionally in some examples, including in at least one preferred example, the wheel unit may be arranged at a front position of the vehicle and may be configured to be steerable.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a cross-section view of an exemplary wheel unit according to an example.

### DETAILED DESCRIPTION

The detailed description set forth below provides information and examples of the disclosed technology with sufficient detail to enable those skilled in the art to practice the disclosure.

The present disclosure relates to a wheel unit for a vehicle, in which an electrical machine and a friction brake assembly are integrated in a compact and thermally connected arrangement. The design allows a stator of the electrical machine and the friction brake assembly to be concentrically arranged inside a rotor, the rotor being mechanically coupled to a rim configured for mounting of a tire radially outside the rim, in relation to a rotational axis of the wheel unit. A shared cooling channel is provided for circulation of cooling liquid through a friction brake housing and stator assembly enclosing the friction brake assembly, and in thermal connection with the stator, enabling efficient removal of heat from both components. This configuration may reduce the number of dedicated cooling subsystems, and may allow thermal energy to be removed using less cooling power. The integrated arrangement may also provide for improved space-efficiency, which may be beneficial for installation flexibility and packaging. These factors may contribute to improved energy efficiency and increased range of the vehicle.

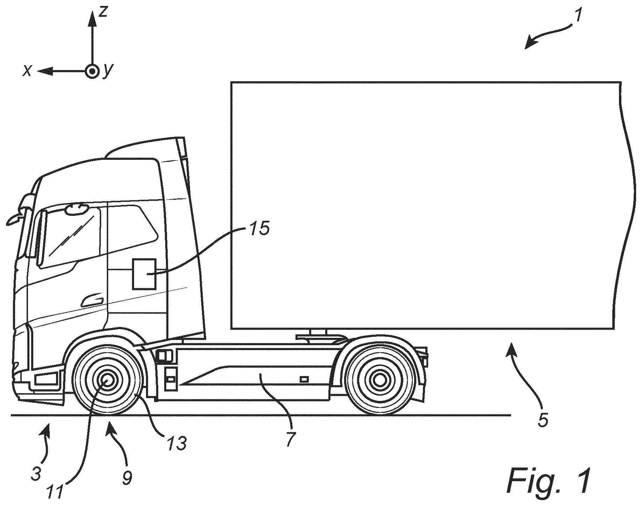

FIG. 1 illustrates an exemplary vehicle 1 according to an example. Referring to FIG. 1, the vehicle 1 comprises a first vehicle member 3 and a second vehicle member 5 coupled to the first vehicle member 3. In this example, the first vehicle member 3 is a battery electric vehicle (BEV) tractor, and the second vehicle member 5 is a semitrailer. However, the present disclosure is not limited to this configuration, and may also apply to vehicles comprising a single vehicle member or to vehicles powered by other means, such as an internal combustion engine or a fuel cell.

Referring again to FIG. 1, the BEV tractor 3 includes a battery pack 7 and a plurality of wheel units 9, one of which is indicated by a reference numeral in FIG. 1. Each wheel unit 9 is arranged to rotate around a respective rotational axis 11 and includes a tire 13 mounted on a rim. In this example, at least one of the wheel units 9 is located at a front position of the vehicle 1 and is configured to be steerable. The BEV tractor 3 also comprises a computer system 15, which may be configured to monitor or control one or more functions of the vehicle, including those associated with the wheel units 9.

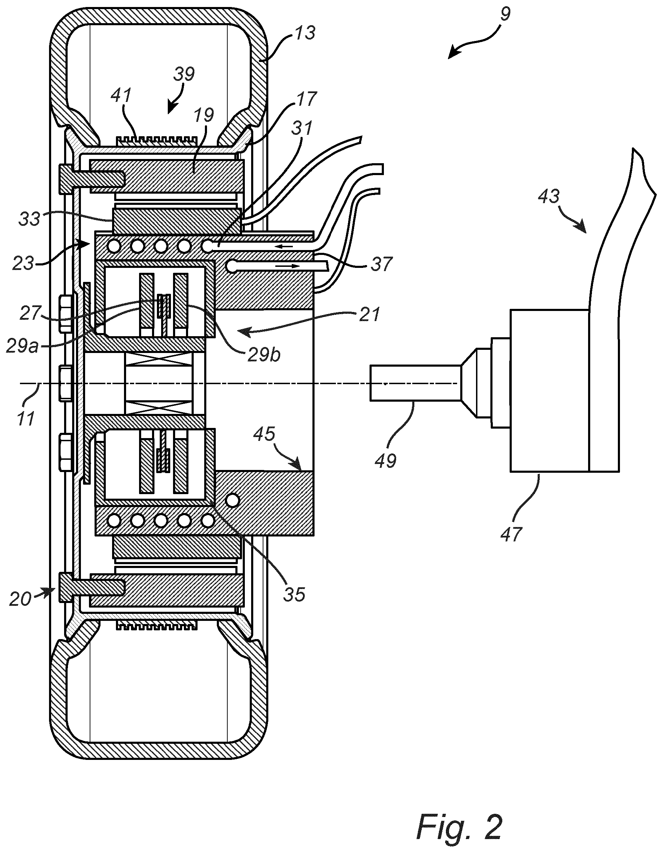

FIG. 2 is a cross-section view of an exemplary wheel unit 9 according to an example. The wheel unit 9 comprises a tire 13, a rim 17, an electrical machine 20, a rotor 19 of the electrical machine 20, a friction brake assembly 21, a friction brake housing and stator assembly 23, a first friction brake member 27, second friction brake members 29a-b, a cooling channel 31, and a stator 33 of the electrical machine 20.

In the example of FIG. 2, the tire 13 is mounted on the rim 17, which is configured to rotate around a rotational axis 11 of the wheel unit 9. The rotor 19 of the electrical machine 20 is mechanically connected to the rim 17, such that the rim 17 and rotor 19 rotate together. A friction brake housing and stator assembly 23 is arranged concentrically inside the rotor 19. The stator 33 of the electrical machine 20 forms part of the friction brake housing and stator assembly 23 and remains stationary in relation to the rotational axis 11. The friction brake assembly 21 is also arranged inside the rotor 19 and includes a first friction brake member 27 that is mechanically coupled to the rim 17 to rotate with it. The second friction brake member 29a-b is non-rotating and positioned to interact with the first friction brake member 27. The friction brake assembly 21 is enclosed by the friction brake housing and stator assembly 23, which also includes the cooling channel 31 for circulation of cooling liquid. The cooling channel 31 is configured to enable removal of heat from both the stator 33 and the friction brake assembly 21.

The configuration shown in FIG. 2, with a large-diameter rotor 19 arranged outside the stator 33, allows the electrical machine 20 to deliver sufficient torque to, at least, maintain cruising of a heavy-duty vehicle without the need for additional gearing. The elimination of gearing reduces mechanical complexity and frees up space within the wheel unit 9. This space can be used to accommodate the friction brake assembly 21 within the friction brake housing and stator assembly 23, enabling compact integration and allowing the brake to be configured for low particle emissions.

As was discussed in the summary section, the cooling channel 31 in the friction brake housing and stator assembly 23 may be formed using different manufacturing techniques. In some examples, grooves or bores may be machined into mating surfaces of the surrounding structure, such that the channel is enclosed when the parts are assembled. In other examples, the channel may be cast into a component using core inserts to define its internal geometry. Additive manufacturing may also be used to form a conformal or thermally optimized flow path, allowing the coolant to follow the thermal load distribution within the assembly.

Optionally, the friction brake housing and stator assembly 23 may comprise a heat transfer structure in the form of a separate cooling part 37, which is schematically indicated in FIG. 2. The cooling part 37 may be arranged between the stator 33 and the friction brake housing 35, and may be configured to thermally connect the stator 33 and the friction brake housing 35. The cooling channel 31 may be formed in the cooling part 37, allowing the cooling channel 31 to be manufactured independently of the surrounding structural elements. While an integrally formed friction brake housing and stator assembly 23 may allow for a more compact design, the use of a separate cooling part 37 may offer increased design flexibility, improved manufacturability, and potential modularity. The cooling part 37 may form a thermal interface with the stator 33 radially outside and with the friction brake housing 35 radially inside, thereby enabling efficient heat removal from both the electrical machine 20 and the friction brake assembly 21.

The friction brake assembly 21 comprises a first friction brake member 27 and second friction brake members 29a-b. The second friction brake members 29a-b may comprise a first disc arranged on an axial first side of the first friction brake member 27 and a second disc arranged on an axial second side, allowing braking forces to be applied symmetrically. This may provide a balanced load distribution and enable compact axial integration. The friction brake assembly 21 may be enclosed within the friction brake housing and stator assembly 23, such that the first friction brake member 27 and the second friction brake members 29a-b are fully contained in a sealed internal volume. This may reduce exposure to external contaminants and allow control of air exchange within the assembly. The friction brake housing and stator assembly 23 may further comprise a filter arranged to capture brake particles generated by interaction between the friction brake members during braking. The sealed configuration may force any airflow through the filter, reducing environmental particle emissions and supporting compliance with relevant regulatory requirements such as Euro 7.

Optionally, the wheel unit 9 may comprise a heat-dissipation arrangement 39 thermally connected to the rim 17 and configured to transfer heat from the rotor 19 of the electrical machine 20 to the tire 13. The heat-dissipation arrangement 39 may be arranged in a space enclosed by the rim 17 and the tire 13, allowing thermal energy from the rotor 19 to be conducted outward toward the tire. This may improve warm-up of the tire 13 during cold starts or operation at low external temperatures, potentially reducing rolling resistance. The heat-dissipation arrangement 39 may comprise a plurality of radially directed protrusions 41, which may serve to increase the surface area for heat transfer and promote conduction and convection of thermal energy. The heat-dissipation arrangement 39 may be made of a metallic material with high thermal conductivity. This configuration may allow heat losses from the rotor 19 to be reused for tire heating, thereby improving overall energy efficiency and contributing to increased vehicle range.

The wheel unit 9 may comprise a steering knuckle 43, which is used to support the wheel unit 9 while allowing it to be steerable in relation to the vehicle structure. The friction brake housing and stator assembly 23 may be configured for non-rotating mechanical coupling to a corresponding interface structure of the steering knuckle 43. The friction brake housing and stator assembly 23 may comprise an interface portion 45 surrounding the rotational axis 11, which may be shaped for form-fitting engagement with a corresponding interface portion 47 of the steering knuckle 43. In some examples, the interface portion 45 and the corresponding interface portion 47 may have a polygonal cross-section, allowing torque to be transmitted without the need for additional fasteners or splines. The interface portion 47 of the steering knuckle 43 may be configured to fit inside the interface portion 45 of the friction brake housing and stator assembly 23, enabling a centered and stable mechanical connection that supports axial assembly and efficient load transfer. The steering knuckle 43 may comprise a stub axle 49 for interaction with a bearing of the wheel unit 9. The stub axle 49 may comprise a cooling channel for providing additional cooling to the wheel unit 9. The cooling channel may be provided with cooling liquid from the steering knuckle 43, or from the friction brake housing and stator assembly 23.

Example 1: A wheel unit 9 comprising a rim 17 configured for mounting of a tire 13 radially outside the rim 17, in relation to a rotational axis 11 of the wheel unit 9; a rotor 19 of an electrical machine 20, the rotor 19 being coupled to the rim 17 such that the rim 17 rotates together with the rotor 19; a friction brake assembly 21 including a first friction brake member 27 coupled to the rim 17 to rotate together with the rim 17, and a non-rotating second friction brake member 29a-b controllable to interact with the first friction brake member 27; and a friction brake housing and stator assembly 23 concentrically arranged inside the rotor 19 of the electrical machine 20 and enclosing the friction brake assembly 21, the friction brake housing and stator assembly 23 including a cooling channel 31 for circulation of cooling liquid for cooling of the friction brake assembly 21 and a stator 33 of the electrical machine 20.

Example 2: The wheel unit 9 of example 1, wherein the friction brake housing and stator assembly 23 comprises a heat transfer structure thermally connecting a friction brake housing 35 and the stator 33.

Example 3: The wheel unit 9 of example 2, wherein the heat transfer structure is a separate cooling part 37 arranged between a friction brake housing and the stator 33, the cooling channel 31 being formed in the cooling part 37.

Example 4: The wheel unit 9 of example 1 or 2, wherein the friction brake housing 23 and the stator 33 are integrally formed as a single structural component.

Example 5: The wheel unit 9 of any of examples 1 to 4, wherein the friction brake housing and stator assembly 23 includes a filter for capturing brake particles resulting from interaction between the first friction brake member 27 and the second friction brake member 29a-b.

Example 6: The wheel unit 9 of any of examples 1 to 5, wherein the second friction brake member 29a-b comprises at least a first disc 29a arranged on an axial first side of the first friction brake member 27 and a second disc 29b arranged on an axial second side of the first friction brake member 27.

Example 7: The wheel unit 9 of any of examples 1 to 6, wherein the friction brake housing and stator assembly 23 is configured to enclose the first friction brake member 27 and the second friction brake member 29a-b.

Example 8: The wheel unit 9 of any of examples 1 to 7, further comprising a heat-dissipation arrangement 39 thermally connected to the rim 17 and configured to transfer heat from the electrical machine 20 to a tire 13 mounted on the rim 17.

Example 9: The wheel unit 9 of example 8, wherein the heat-dissipation arrangement 39 comprises a plurality of radially directed protrusions 41 to increase the surface area for heat transfer to the tire 13.

Example 10: The wheel unit 9 of example 8 or 9, wherein the heat-dissipation arrangement 39 is made of a metallic material with high thermal conductivity to improve heat conduction from the rim 17 to the tire 13.

Example 11: The wheel unit 9 of any of examples 8 to 10, wherein the electrical machine 20 is configured to be controlled to generate additional heat for tire heating by adjusting at least one control parameter, including excitation frequency or voltage.

Example 12: The wheel unit 9 of any of examples 1 to 11, wherein the rotor 19 of the electrical machine 20 comprises a plurality of conductors for generating a magnetic field of the rotor 19.

Example 13: The wheel unit 9 of example 12, the electrical machine 20 being an induction machine.

Example 14: The wheel unit 9 of example 12, the electrical machine 20 being an externally excited machine.

Example 15: The wheel unit 9 of any of examples 1 to 14, further comprising a steering knuckle 43, wherein the friction brake housing and stator assembly 23 is configured for non-rotating mechanical coupling to a corresponding interface structure of the steering knuckle 43.

Example 16: The wheel unit 9 of example 15, wherein the friction brake housing and stator assembly 23 comprises an interface portion 45 surrounding the rotational axis 11, the interface portion 45 being shaped for form-fitting engagement with a corresponding interface portion 47 of the steering knuckle 43.

Example 17: The wheel unit 9 of example 16, wherein the interface portion 45 of the friction brake housing and stator assembly 23 and the corresponding interface portion 47 of the steering knuckle 43 have a polygonal cross-section for transmission of torque.

Example 18: The wheel unit 9 of example 16 or 17, wherein the corresponding interface portion 47 of the steering knuckle 43 is configured to fit inside the interface portion 45 of the friction brake housing and stator assembly 23, in relation to the rotational axis 11.

Example 19: A vehicle 1 comprising a wheel unit 9 according to any of examples 1 to 18.

Example 20: The vehicle 1 of example 19, wherein the wheel unit 9 is arranged at a front position of the vehicle 1 and is configured to be steerable.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A wheel unit (9) comprising:
a rim (17) configured for mounting of a tire (13) radially outside the rim (17), in relation to a rotational axis (11) of the wheel unit (9);
a rotor (19) of an electrical machine (20), the rotor (19) being coupled to the rim (17) such that the rim (17) rotates together with the rotor (19);
a friction brake assembly (21), including a first friction brake member (27) coupled to the rim (17) to rotate together with the rim (17), and a non-rotating second friction brake member (29a-b) controllable to interact with the first friction brake member (27); and
a friction brake housing and stator assembly (23) concentrically arranged inside the rotor (19) of the electrical machine (20) and enclosing the friction brake assembly (21), the friction brake housing and stator assembly (23) including a cooling channel (31) for circulation of cooling liquid for cooling of the friction brake assembly (21) and a stator (33) of the electrical machine (20).

2. The wheel unit (9) of claim 1, wherein the friction brake housing and stator assembly (23) comprises a heat transfer structure thermally connecting a friction brake housing (35) and the stator (33).

3. The wheel unit (9) of claim 2, wherein the heat transfer structure is a separate cooling part (37) arranged between the friction brake housing and the stator (33), the cooling channel (31) being formed in the cooling part (37).

4. The wheel unit (9) of claim 1 or 2, wherein the friction brake housing (23) and the stator (33) are integrally formed as a single structural component.

5. The wheel unit (9) of any of claims 1-4, wherein the friction brake housing and stator assembly (23) includes a filter for capturing brake particles resulting from interaction between the first friction brake member (27) and the second friction brake member (29a-b).

6. The wheel unit (9) of any of claims 1-5, wherein the second friction brake member (29a-b) comprises at least a first disc (29a) arranged on an axial first side of the first friction brake member (27) and a second disc (29b) arranged on an axial second side of the first friction brake member (27).

7. The wheel unit (9) of any of claims 1-6, wherein the friction brake housing and stator assembly (23) is configured to enclose the first friction brake member (27) and the second friction brake member (29a-b).

8. The wheel unit (9) of any of claims 1-7, further comprising a heat-dissipation arrangement (39) thermally connected to the rim (17) and configured to transfer heat from the electrical machine (20) to a tire (13) mounted on the rim (17).

9. The wheel unit (9) of claim 8, wherein the heat-dissipation arrangement (39) comprises a plurality of radially directed protrusions (41) to increase the surface area for heat transfer to the tire (13).

10. The wheel unit (9) of claims 8 or 9, wherein the electrical machine (20) is configured to be controlled to generate additional heat for tire heating by adjusting at least one control parameter, including excitation frequency or voltage.

11. The wheel unit (9) of any of claims 1-10, wherein the rotor (19) of the electrical machine (20) comprises a plurality of conductors for generating a magnetic field of the rotor (19).

12. The wheel unit (9) of any of claims 1-11, further comprising a steering knuckle (43), wherein the friction brake housing and stator assembly (23) is configured for non-rotating mechanical coupling to a corresponding interface structure of the steering knuckle (43).

13. The wheel unit (9) of claim 12, wherein the friction brake housing and stator assembly (23) comprises an interface portion (45) surrounding the rotational axis (11), the interface portion (45) being shaped for form-fitting engagement with a corresponding interface portion (47) of the steering knuckle (43).

14. The wheel unit (9) of claim 13, wherein the interface portion (45) of the friction brake housing and stator assembly (23) and the corresponding interface portion (47) of the steering knuckle (43) have a polygonal cross-section for transmission of torque.

15. A vehicle (1) comprising a wheel unit (9) of any of claims 1-14.
